# EUROPEAN PATENT SPECIFICATION

(11) **EP 2 750 867 B1**
(45) Date of publication and mention of the grant of the patent: **03.02.2016**
(21) Application number: 12770327.0
(22) Date of filing: 31.08.2012
(51) Int. Cl.: B29D 11/00

(54) **METHOD OF TREATING AN OPHTHALMIC LENS FORMING OPTIC**
VERFAHREN ZUR BEHANDLUNG EINER OPHTHALMISCHEN LINSE ZUR FORMUNG EINER OPTIK
PROCÉDÉ DE TRAITEMENT D'OPTIQUE DE FORMATION DE LENTILLE OPHTALMIQUE

(30) Priority: 31.08.2011 US 201161529623 P; 31.08.2011 US 201161529605 P; 31.08.2011 US 201161529617 P; 30.08.2012 US 201213599841; 30.08.2012 US 201213599893
(43) Date of publication of application: 09.07.2014
(73) Proprietor: Johnson & Johnson Vision Care Inc., Jacksonville, FL 32256 (US)
(72) Inventor: WIDMAN, Michael F., Jacksonville, Florida 32223 (US); ENNS, John B., Jacksonville, Florida 32257 (US); WILDSMITH, Christopher, Jacksonville, Florida 32256 (US); POWELL, P., Mark, Jacksonville, Florida 32258 (US); SITES, Peter W., Orange Park, Florida 32003 (US)
(74) Representative: Carpmaels & Ransford LLP
(86) International application number: PCT/US2012/053304
(87) International publication number: WO 2013/033511

(56) References cited:
- EP-A2- 0 686 486
- US-A- 5 894 002

## Description

### FIELD OF USE

This invention describes a method of pre-treating a forming optic used for the fabrication of Free Formed ophthalmic Lenses, more specifically, the pre-treatment disclosed to change properties of the forming optic composition and cleaning.

### BACKGROUND OF THE INVENTION

It is known to fabricate ophthalmic lenses via molding techniques in which a monomer material is deposited in a cavity defined between optical surfaces of two or more opposing mold parts. Multi-part molds used to fashion hydrogels into a useful article, such as an ophthalmic lens, may include for example, a first mold part with a convex portion that corresponds with a back curve of an ophthalmic lens and a second mold part with a concave portion that corresponds with a front curve of the ophthalmic lens

To prepare a lens using such mold parts, an uncured hydrogel lens formulation is placed between a plastic disposable front curve mold part and a plastic disposable back curve mold part and polymerized. However, a design of an ophthalmic lens derived therefrom is limited to a design of the mold utilized. As a consequence of the foregoing, the process is suited to high volume runs of a limited number of lens sizes and shapes, each size and shape associated with a SKU number.

US-A-5 894 002 discloses a method for making contact lenses by polymerization of monomers in a mould cavity. Prior to filling the mould, one of the mould halves is treated by corona discharge (see the claims together with column 1, line 66, to column 4, line 3).

It is desirable therefore to have additional apparatus and methods conducive to the formation of a polymerized ophthalmic lens that it may be fashioned in a shape not dependent upon an ophthalmic lens mold such as for example, a lens tailored to one or both of a specific patient or purpose.

### SUMMARY OF THE INVENTION

The present invention is directed to a method of cleaning and pre-treating a forming optic used for the manufacture of ophthalmic Lenses in a Free Form manufacture manner of at least one ophthalmic lens. More specifically, the cleaning which can be used to change the surface energy characteristics of the optical quality forming surface and may also be used for the application of a monolayer.

Forming optics may include an assembly comprising a mandrel with an optical quality surface used for the fabrication of customized ophthalmic lenses in a Free Form manner. According to the present invention, a forming optical quality surface of a mandrel may include one or more radii/shape of curvature, of forming optic quality surface. Each respective radius of said forming optic quality surface may correspond with an angle of steepness of the mandrel for the selected radius of curvature and/or shape.

A positioning artifact, such as, a groove, an indentation, an alignment pin, or other mechanical or electro mechanical device or adhesive may be included around the optic forming optic. For example, in some forming optic assemblies, the mandrel can include one or more positioning artifact around the circumference of the exterior lateral portion of the mandrel. Said positioning artifact may be used for mounting and precise adjustment of a forming optic mandrel in relation to a source of actinic radiation.

In another aspect, compositions of the forming optic are also taught. One skilled in the art will appreciate the properties of the exemplary compositions disclosed since they can be useful for the fabrication of ophthalmic Lenses in a Free Form manner. For example, the properties may provide for the bonding of a monolayer, such as a silane monolayer, that may be used to provide more acceptable surface energy characteristics and transmissive properties to allow the Free Form formation of a Lens Precursor useful for the fabrication of customized Lenses.

### BRIEF DESCRIPTION OF THE DRAWINGS

Fig. 1A illustrates an exemplary forming optic mandrel with an angle of curvature that may be implemented in the Free Form fabrication of an ophthalmic Lens.
Fig. 1B illustrates another exemplary forming optic mandrel with a steep angle of curvature that may be implemented in the Free Form fabrication of an ophthalmic Lens.
Fig. 1C illustrates an exemplary forming optic mandrel with surface features that may be implemented in the Free Form fabrication of an ophthalmic Lens.
Fig. 1D illustrates another exemplary forming optic mandrel with a concave surface that may be implemented in the Free Form fabrication of an ophthalmic Lens.
Fig. 2 is a table of properties for the forming optic that may be implemented in the Free Form fabrication of an ophthalmic Lens.
Fig. 3 is a chart illustrating the transmission of an exemplary composition for the mandrel at frequencies that may be implemented in the Free Form fabrication of an ophthalmic Lens.
Fig. 4A illustrates a side view cross section of an exemplary forming optic assembly comprising the forming optic mandrel and mounting plate that may be implemented in the Free Form fabrication of an ophthalmic Lens.
Fig. 4B illustrates a side view cross section of another exemplary forming optic assembly comprising the forming optic mandrel and mounting plate that may be implemented in the Free Form fabrication of an ophthalmic Lens.
Fig. 5 illustrates a top view of the exemplary forming optic illustrated in Fig. 4A with an exemplary mounting/adjusting mechanism that may be useful in the present invention.
Fig. 6 illustrates an exemplary forming optical quality surface with a Free Formed ophthalmic Lens with edge characteristics resulting from the pre-treatment of the forming optical quality surface.
Fig. 7 illustrates another exemplary forming optical quality surface with a Free Formed ophthalmic Lens with edge characteristics resulting from an untreated optical quality optical quality surface.
Fig. 8 illustrates an isometric view of yet another exemplary forming optic comprising mechanical alignment means that may be useful in the present invention.
Fig. 9 illustrates exemplary methods steps that may be implemented to clean and pre-treat at least the optical quality forming surface portion of a forming optic.

### DETAILED DESCRIPTION OF THE INVENTION

The present invention provides for an apparatus and methods used to fabricate an ophthalmic Lens in a Free Form manner. For example, it may be implemented in the fabrication of customized Free Formed ophthalmic Lenses as described in United States Patent Application No. 12/396019 titled "Ophthalmic Lens Precursor and Lens", filed by the same inventive entity of the present invention. In the following sections detailed descriptions of embodiments and methods will be given. The description of both preferred and alternative embodiments though are exemplary embodiments only, and it is understood that to those skilled in the art that variations, modifications and alterations may be apparent. It is therefore to be understood that the exemplary embodiments do not limit the broadness of the aspects of the underlying invention as defined by the claims.

### GLOSSARY

"Actinic Radiation" as used herein, refers to radiation that is capable of initiating a chemical reaction.

"Collimate" as used herein means to limit the cone angle of radiation, such as light that proceeds as output from an apparatus receiving radiation as an input; the cone angle may be limited such that proceeding light rays are parallel. Accordingly, a "collimator" includes an apparatus that performs this function and "collimated" describes the effect on radiation.

"Custom Product" as used herein, refers to a Product including one or more parameters that may be available in other than customary or Standard Products and/or settings. Custom Product parameters can allow for more precisely targeted sphere power, cylinder power, and cylinder axis (e.g., -3.125D/-0.47D x 18°) than Standard Products. The customized settings may also relate to base curves, diameters, stabilization profiles, and thickness profiles based upon a particular Product offering and the intended use of the Product.

"Expansion Factor" as referred to herein is a ratio at which the Lens Precursor may change in size after the hydration and stabilization of said customized ophthalmic lens.

"Fitting Practices" as referred to herein refer to customary best ophthalmic lens fitting practices implemented by eye care practitioners including ophthalmologists and optometrists.

"Free-Form" and "Free-Formed" as used herein refer to a surface that is formed by crosslinking of a Reactive Mixture via exposure to actinic radiation, with or without a fluent media layer, and is not shaped according to a cast mold, lathe, or laser ablation. Detailed descriptions of exemplary Free-Form manufacturing methods and apparatus are disclosed in United States Patent Applications S/N 12/194,981 and in United States Patent Application S/N 12/195,132 of the same inventive entity of the present invention.

"Grayscale Photomask" as referred to herein is a spatially variable neutral density filter. For example, it may be a photolithography film that may have partially shaded silvered regions.

"Human Eye Physiology" as referred to herein includes the patient's unique shape of the front portion of the eye (the "anterior chamber") for whom the ophthalmic lens may be generated/customized for best fit.

"Lens Precursor" as used herein means a composite object consisting of a Lens Precursor Form and a Fluent Lens Reactive Mixture (also referred to as "Fluent Lens Reactive Media") in contact with the Lens Precursor Form. For example, Fluent Lens Reactive Media may be formed in the course of producing a Lens Precursor Form within a volume of Reactive Mixture. Separating the Lens Precursor Form and adhered Fluent Lens Reactive Media from a volume of Reactive Mixture used to produce the Lens Precursor Form may generate a Lens Precursor. Additionally, a Lens Precursor may be converted to a different entity by either the removal of significant amounts of Fluent Lens Reactive Mixture or the conversion of a significant amount of Fluent Lens Reactive Media into non-fluent incorporated material, the latter then being known as an Unhydrated Ophthalmic Lens. Dimensionally, a Lens Precursor just prior to actinic radiation which converts the fluent media to non-fluent media is equivalent to an Unhydrated Ophthalmic Lens.

"Lens" as used herein, refers to any ophthalmic device that resides in or on the eye. These devices may provide optical correction or may be cosmetic. For example, the term Lens may refer to a contact Lens, intraocular Lens, overlay Lens, ocular insert, optical insert or other similar device through which.vision is corrected or modified, or through which eye physiology is cosmetically enhanced (e.g., iris color) without impeding vision. Preferably the Lenses of the invention are soft contact Lenses and are made from silicone elastomers or hydrogels, which include but are not limited to silicone hydrogels, and fluorohydrogels.

"Monolayer" as referred herein is a coating of atoms or molecules confluent by way of bonding to an optic surface, wherein the coating has a thickness of one layer of molecules of the substrate being used.

"Piranha Solution" as used herein, is a mixture used to clean residues off substrates. Said mixture which may act as a strong oxidizer and may remove organic matter and hydroxylate most surfaces making them hydrophilic, that is lowers the contact angle with water. For example, a mixture comprising three parts sulfuric acid and one part hydrogen peroxide.

"Pre-treatment" as referred herein is subjecting the forming optic surface to some agent or action to bring a particular result in a specified manner or style.

"Reactive Mixture" as used herein, may be interchangeably used with "Lens Forming Mixture" and may include a lens-forming monomer, which refers to a monomer or prepolymer material which may be cured and/or crosslinked to form an ophthalmic lens or portion of an ophthalmic lens. Lens-forming mixtures may include one or more additives such as: UV blockers, tints, photoinitiators, or catalysts, and other additives one might desire in an ophthalmic lenses such as, contact or intraocular lenses.

Working backwards from the optimal ophthalmic lens optic design may allow the determination of a specific shape/size of a forming optic. Factors comprising: Human Eye Physiology, common Fitting Practices of eye care practitioners, corneal topography measurements, and material Expansion Factors may be used to design Free Formed ophthalmic Lenses. The base curve radius of an ophthalmic Lens may be the radius of curvature of the central posterior optical section known as the central optical radius of the anterior chamber of the eye.

The physiology of the human eye may dictate the radii of curvature of the lens and whether the posterior curvature of the lens should be a monocurve, bicurve, or aspheric. Generally, the apical radius of curvature of a normal eye may be approximately from 7.2-8.7mm. However, in keratoconus patients the individual corneas may take on a wide range of topographical shapes that have been classified as "nipple," "oval," and "globus". These classifications are due to the shape and apical radius of curvature of their eye, which results in a dramatically much steeper base curve and varying shape. For example, in a nipple shape, the base curve radius may be as low as 5.0 mm and require a lens with respective shape variations and a much steeper base curve. As result, it is important that the shape and radii of curvature of the lens be designed so that it matches the eye to allow the eye to continue performing normal functions and correct defective vision accordingly. For example, for some patients, if the cornea is aspheric and there is flatness from center to the periphery, a monocurve lens intended to align the lens with the peripheral limbar or sclera would likely be too steep in the periphery, and not allow tear exchange important for oxygen exchange and debris removal to occur.

After measuring the eye, it may also be important to follow common fitting practices of eye care practitioners when designing the ophthalmic Lens. Normally, with soft contact lenses it is desired that the base curve radius of the lens be about 0.8mm flatter than the anterior corneal surface. This gives the lens a larger diameter that may allow the lens to drape over flatter from the base curve to the outermost curve, as it may be desired.

Some Free Form manufacturing methods include forming a Lens Precursor that can be processed into an unhydrated ophthalmic Lens and which may expand after hydration and equilibration. The expansion of the hydrated and equilibrated ophthalmic Lens, over, the size of the Free Formed Lens Precursor, is proportional to the Expansion Factor. The expansion factor may vary depending on the process and environment used to polymerize the lens, and inherent properties of the monomer. Consequently, the size of the forming optic may not be limited if the expansion factor is known.

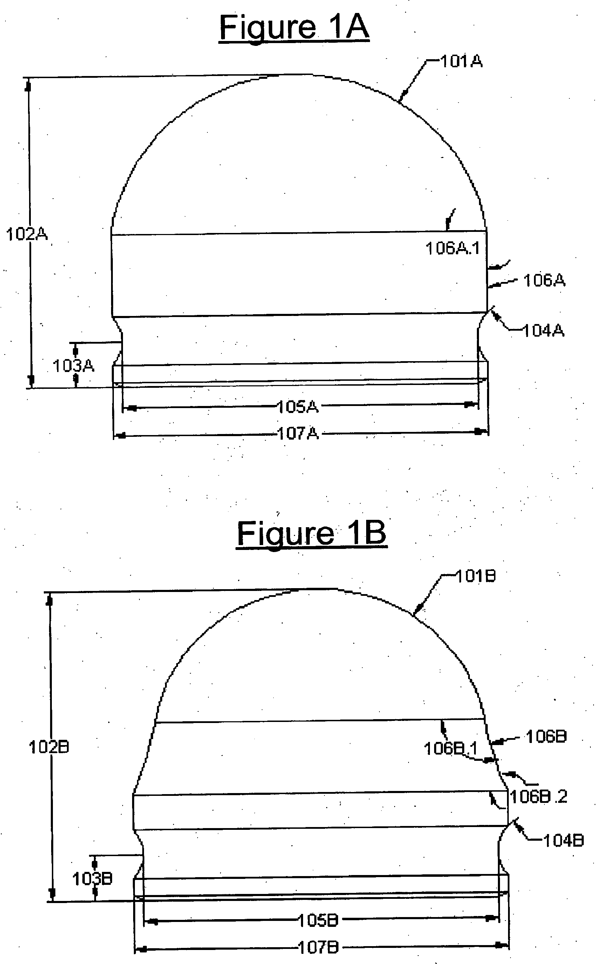

For this invention, in Free Form manufacturing methods the shape of a forming optic generally may include a first optical quality surface based upon a desired shape of a manufactured article. Where the forming optic is part of the projection path for Actinic Radiation, it may be required that a representative voxel by voxel image exist in the forming plane of the ophthalmic Lens. In accordance, preferably, the forming optic may be a plano-convex forming optic mandrel as depicted in Fig. 1A. Alternatively, depending on the design of the projection optics in the Free Form forming apparatus, it may be convex-convex, plano-concave, concave-convex, or any combination thereof so long as 1) if the lens is formed from the back curve to the front curve, the forming optic mandrel surface has a convex shape, or 2) if the lens if formed from the front curve to the back curve, the forming optic mandrel surface has a concave shape.

Referring now to Fig. 1A a side view is illustrated of a forming optic that includes an exemplary forming optic mandrel with a convex optical quality surface with radii of curvature from 7.4mm - 8.0mm. The radii of the optical quality surface designs may be useful in the formation of Free Formed ophthalmic Lenses. At 101A, a forming optical quality surface is shown. Said surface may have different radii from 7.4 mm to 8.0 mm for the design depicted. By changing the radius of curvature, the radius of the back curve portion of the lens formed may be changed. The change in the back curve portion of the lens may be a constant proportional change determined by the measurement of the radius of curvature used in the forming optical quality surface and an expansion factor of X, may be dependant on the lens material formulation used. The expansion factor is not restricted so long as it is sufficiently constant in the method used. For example, where the commonly known lens material Etafilcon-A is used, the expansion factor, X, is approximately 1.11 (1.09 to 1.12) occurring constantly throughout the formation process of the ophthalmic finished lens.

At 102A, the distance from the top of the forming surface to the bottom of the optic mandrel is shown. A distance for the lens manufacturing apparatus (described in applications filed concurrently) can be 12.7mm +/-0.01; this can provide for sufficient clearance so that the surfaces of the reservoir do not interfere with the forming optic and the polymerization of the Reactive Mixture. At 103A, the distance from the base of the optic surface to the middle of a groove around the circumference of the lower lateral side of the mandrel is depicted. The preferred distance is 1.88 mm. This distance may allow for precise positioning and adjusting of the forming optic mandrel of a mounting plate as further described in other parts of this description. At 104A, the radius of curvature of the lateral groove is shown. The preferred radius used is 1.5mm. Said preferred radius may also allow for precise positioning and adjustments of the optic surface by allowing metal fittings at fixed points to fit and function as described in other parts of this description. Additionally, the lateral groove horizontal portion is preferred to have a 14.00mm +0.10/-.00 length as depicted in 105A.

At 106A, the middle portion is shown. Said middle portion may include a linear optical path connection to the forming optical quality surface. Said connection may result in an angle of steepness, 106A.1, of 90° which corresponds to the radii of curvature of the forming optical quality surface. For the radii of curvature within this specified range, the 90° angle of steepness of the side portion of the optic mandrel may allow adequate transmission of Actinic Radiation. Finally, at 107A, a diameter of the mandrel that may be useful in implementing the present invention is depicted. Said diameter is, for example, 14.6 mm to allow positioning in other parts of the optic assembly.

Referring now to Fig. 1B, a side view drawing of the design of a forming optic mandrel with a forming optical quality surface radii of curvature from 6.6 mm - 7.2 mm is depicted. The exemplary radii of the forming optical quality surface design shown in Fig. 1B may be used, for example, for the formation of Free Formed ophthalmic Lenses for patients with steep corneal transitions. At 101B, a forming optic surface is shown. Said surface may have different radii from 6.6mm to 7.2 mm for the design depicted. Parallel with larger radii of curvature for the forming surface, by changing the radius of curvature, the radius of the back curve portion of the lens formed may be changed proportionally.

At 102B, the distance from the top of the forming surface to the bottom of the optic mandrel is shown. A distance for the lens manufacturing apparatus (described in applications referenced herein) may be 12.7mm +/-0.01; again, this provides clearance so that surfaces of the reservoir used do not interfere with the Free Form polymerization of the Reactive Mixture. At 103B, the distance from the base of the optic surface to the middle of a groove around the circumference of the lower lateral side of the mandrel is depicted. The distance may be 1.88 mm, this distance may allow for precise positioning and adjusting of the forming optic mandrel in other parts of this invention. At 104B, the radius of curvature of the lateral groove is shown. The radius used may be 1.5 mm. Said radius also allows for precise positioning and adjustments of the optic surface, for example, by allowing metal fittings at fixed points to fit in and function as described hereon. Additionally, the lateral groove horizontal portion is preferred to have a 14.00mm +0.10/-.00 length as depicted in 105B.

At 106B, the middle portion is shown. Said middle portion may include an arcuate surface with radius Y, with an angle of steepness 106B.2 or a linear connection, however, the angles of steepness 106B.1 and 106B.2 can be dependant of one another. Either one may be used so long as it allows the forming surface, 101B with the radius of curvature being used provides for a clear optical aperture for Actinic Radiation to pass through accordingly. The variables used may be proportional to the angle of curvature of the forming optical quality surface to provide a point tangential between Y and Z, ensuring that the desired transmission of Actinic Radiation may pass through the mandrel in the manner preferred for the forming of the lens and for manufacturing ease. For example, to provide a point tangential between Y and Z, a forming surface with an angle of steepness with a radius of 6.60 mm may have a middle portion with an angle resulting from a radius of 12.7 mm, where the center point of the circumference is 11.71 mm from the side of the base of the mandrel and 9.45mm high. In an example of another embodiment, a forming surface with an angle of steepness with a radius of 7.0 mm may have middle portion with an angle resulting from a radius of 12.7 mm, where the center point of the circumference is 12.12 mm from the side of the base of the mandrel and 9.02 mm high. Finally, at 107B, a diameter of the mandrel that may be useful in the present invention is depicted. Said diameter is also 14.6mm to allow for positioning and adjustment as described in other parts of this invention.

Additional ophthalmic lens features may be achieved using other shapes or features in the forming optic. For example, the optical quality surface may have lens edge shaping geometric features that can account in the the manner in which the lens edge interacts with the patient's eye. For example, it may be desirable for some Human Eye Physiology to alter the back curve radius or profile very near the edge of the lens to provide a more comfortable lens or for a functional aspect. To achieve this, counteractive shapes may be used for the optical quality surface of the forming optic. Furthermore, the shape features may be made on custom contours or in specified perimeters for cases where the lens is not circular so that the features vary at different radii/parts of the lens. Consequently, the radius near the edge of the lens may flatten or steepen depending on the desired finished lens effect.

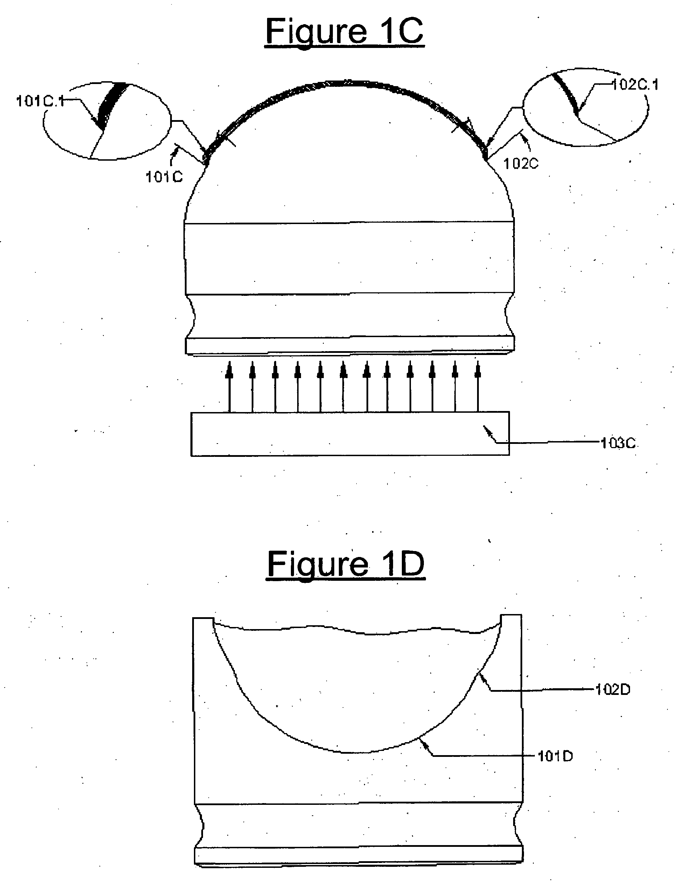

Referring to Fig. 1C, a side view drawing of the design of an exemplary forming optic with forming surface features that may be capable of forming further Free Formed ophthalmic Lenses is depicted. At 101C, the base curve of the forming optic may provide a shape feature around the perimeter to induce a curled shape of the edges of the lens. (Features in figures are exaggerated to illustrate clearly.) At 101C.1 and 102C.1, the contact angle is shown between the Forming Optic surface and the fluent media of the Lens Precursor. The contact angle varies depending on the optical quality forming surface properties of the forming optic and the material of the Reactive Mixture used. In this case the Reactive Mixture can be a mixture of unreacted and partially reacted Lens Forming Mixture. The shape of the produced ophthalmic lens and lens edge profile may be influenced due to the contact angle because the contact angle can act as a boundary condition for the minimal energy state of the fluent media of the Lens Precursor existing on the surface. Pre-treatment of the optical quality forming surface of the mandrel may be desired to prevent drooping or creeping of the fluent media and therefore may result in an undesirable lens edge profile shape.

In addition, the geometry of the surface features may change spatially as desired to provide additional advantages for the resulting Free Formed ophthalmic Lens. For example, at 102C.1, a flattened shape at the formed edge of the lens may result from the change. This may result in a lens in which the edge of the lens does not lay on the eye, as it may not be desirable in some patients that may be overly sensitive, providing improved comfort to these patients. At 103 C, a source of Actinic Radiation is depicted. For example, the source used may be a DMD apparatus, said DMD apparatus may be capable of generating vectors of actinic radiation at programmed wavelengths for the manufacturing lenses. Moreover, additional differences in shapes may also provide customized ophthalmic lenses that are multizonal for karatoconous patents to accommodate the unique shape of the cornea and sclera regions of the eye.

The customized ophthalmic lens may be formed from the front curve side of it. Referring to Fig. 1D, a concave forming optic mandrel surface that may be useful in the invention is depicted. This shape may allow for the formation of the customized ophthalmic lens from the front curve side. Additionally, in some methods, the removal of excess liquid polymer may be desired. However, using this forming optic design shape may allow the forming optic to act as the reservoir. At 101D, the concave forming optical quality forming surface is shown. As depicted at 102D, said optical quality forming surface may also include shape features to accommodate unique eye shapes and conditions as desired.

A constant light source may be used as a source of Actinic Radiation as opposed to the preferred DMD Voxel by Voxel method described in the referenced applications. In other methods where a constant actinic radiation source is used, a Grayscale Photomask may also be incorporated in forming optic. For example, partially silvered regions of the Grayscale Photomask in the mandrel may produce thicker regions of the lens vs. the darker regions that may result in thinner regions in the lens, resulting from the denser portions curing slower due to the shading.

The optic surface mandrel composition for the formation of ophthalmic lenses, in particular customized lenses may be made from glass, quartz, ruby, and sapphire or from a variety of thermoplastic polymers. Generally, glass and quartz surfaces may be cost effective, chemical resistant, more durable, and provide higher transparency and higher dimensional stability. Additionally, it is important that the compositions used allow for transmission of Actinic Radiation and resist chemical interaction with Lens Forming Mixtures used.

Borosilicate glass may be used for the forming optic. Borosilicate glass is widely used for laboratory glassware, and may be either mass produced or custom made. Furthermore, it is available in optical grades, for example borosilicate glass' ("N-BK7"). N-BK7 borosilicate glass can have thermal properties with low expansion coefficients and high softening point. It also offers a high level of resistance to attack from water, acids, salt solutions, organic solvents, halogens and other additives that one might desire to use in the production of ophthalmic lenses. Moreover, resistance to alkaline solutions is moderate and its composition properties may include transmissive properties that allow Actinic Radiation to pass through as desired for the fabrication of said customized lenses.

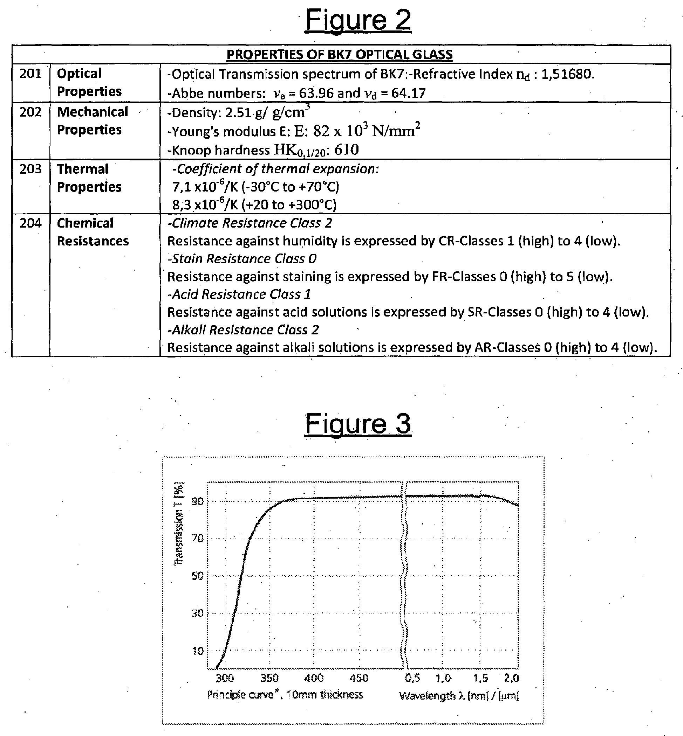

Referring now to Fig. 2, is a table with borosilicate glass' ("N-BK7") properties. At 201, the Optical Properties of the N-BK7 glass are given. The wavelength used throughout the formation of said customized lenses may be typically λ365 and λ420. As shown in Fig. 3, N-BK7 allows for over 90% of the Actinic Radiation to be transmitted at these frequencies. A material that allows transmission of at least 30% of Actinic Radiation at these wavelengths may be used as the amount of Actinic Radiation may be increased proportionally. However, as provided by N-BK7, it is important that the transmission does not change over time manufacturing repeatability.

Referring back to Fig. 2, another optical property that may be important is the refractive index. A refractive index n_{d} from 1.458 (n_{d} of quartz) to 1.77 (n_{d} of sapphire) may be acceptable for the forming optic. N-BK7's refractive index is n_{d} 1.5168, therefore may be acceptable. In addition, since the forming process is sensitive to wavelengths, then it may be desirable to have a low chromatic dispersion. Therefore, it may also be desirable that the refractive index of the Reactive Mixture used is close to the one of the composition of the mandrel to prevent distortion of the image during the forming process.

An Abbe number is also depicted at 201. The Abbe number is also known as the V-number or constringence of a transparent material and is a measure of the material's dispersion (variation of refractive index with wavelength) in relation to the refractive index. Low dispersion (low chromatic aberration) materials have high values of *V*. It may be important that low chromatic aberration materials are used. Preferably, the Abbe number of the composition of the forming optic mandrel may be from 63.96 (N-BK7) to 106.18 (MgF₂). In N-BK7, The Abbe number or ν_{d} is equal to 64.17.

At 202, mechanical properties of N-BK7 are given. The density and hardness of the composition used may be important. Density provides how permeable the mandrel is and may limit the polymer used for the lens. For example, N-BK7 has a density of 2.51 g/g/cm³. An acceptable range may be from 2.20 g/g/ cm³ (UV Fused Silica) to 5.27 g/g/ cm³ (ZnSe). Hardness can provide for how resistant to an applied force the mandrel may be and can be important to prevent fracture of the mandrel during positioning. N-BK7 has a Knoop hardness of HK_{0,1/20}: 610. An acceptable range is 105 kg/mm² (ZnSe) up to 740 kg/mm² (Crystal Quartz) to tolerate the formation process of said Free Formed Lenses.

A mounting frame can be used to hold and align the mandrel of a forming optic. The material's thermal coefficient of the mounting frame holding an optic mandrel used may limit the thermal coefficient that may be used for the forming optic mandrel. However, if the same material is used for the frame and the forming optic mandrel, there may not be limitations resulting from it. At 203, thermal properties of N-BK7 are given. Preferably, the frame holding the optic forming mandrel is made of stainless steel. Because the thermal expansion coefficient is lower than the stainless steel's coefficient, N-BK7 may be used in the invention. The inverse would squeeze the optic possibly fracturing the mandrel.

Finally, at 204, chemical resistances of N-BK7 are given. Generally, Lens Forming Mixtures and pre-treatment may require that the forming optic mandrel is resistant to chemicals used in the mixtures and Actinic Radiation. N-BK7 allows for this in a constant manner, making it suitable for use in the invention.

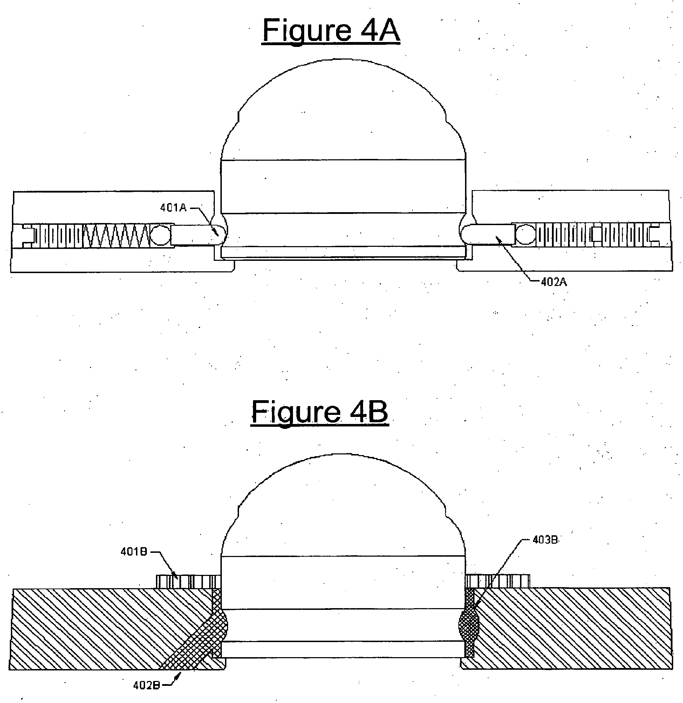

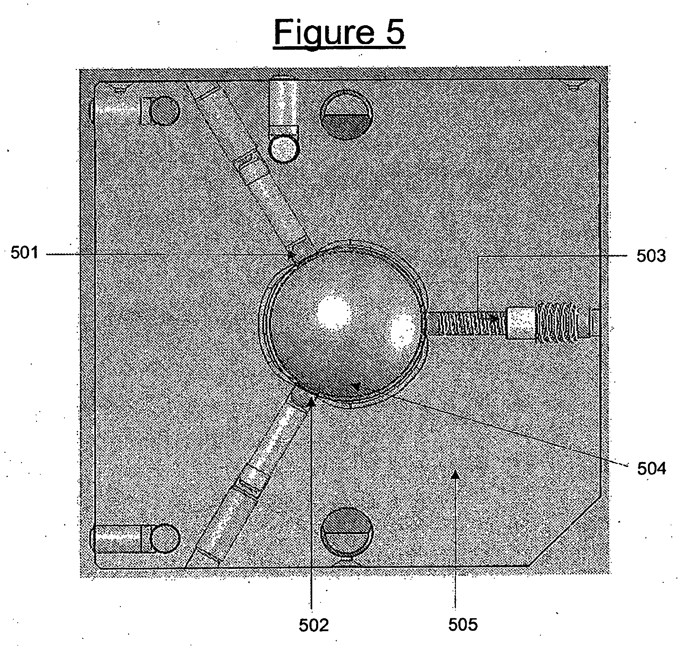

As illustrated in Fig. 4A, 4B and 5, a forming optic can include a forming mandrel that may sit on a mounting frame. Said frame may be made of a metal such as stainless steel, aluminum, an optical material, etc. The forming optic assembly may include a kinematic mounting device to hold the forming optic assembly in place. To those in the art, a kinematic mount is defined as a mechanism for mounting an object in a fixed position relative to another. The use of the kinematic mount and kinematic mounting technique may allow the forming optic assembly to have less than 1 submicron of deviation in the X, Y, and Z position every time it positioned. This may be important for three reasons: 1) when forming the lens, it is formed exactly in the same place on the forming optic every time; 2) when measuring the forming optic without a lens, the forming optic is in the same exact position; 3) when measuring the lens on the forming optic, the forming optic is in the same exact position with respect to the displacement sensor where the point of reference for the measurement is made; and 4) repeatable positioning of the lens allows for the thickness measured to be a point to point difference between the generated ophthalmic lens' measurements and the mandrel's measurements.

Referring now to Fig. 4A, a side view of an exemplary kinematic mounting device assembly that may be used for the invention. There are three steel or tungsten carbide positioning bullets (only two of which are shown), in the top of the plate of the kinematic mount in a bore and the position of each bullet may be adjusted with a screw until the balls touch the forming optic assembly at a single point, thereby positioning the forming optic mandrel on the base of the forming optic assembly. Alternatively, the bullet may be replaced by a ball, it may also include a ball-bullet-pusher-screw combination, or any combination thereof that is capable of the same functionality described hereon. At 401 A, one of the three bullets is depicted. Said ball may be operative by means of a screw and spring, i.e. ball plunger. At 402B, the system of the remaining two bullets is depicted. Said bullets may be operative in the system by means of two setscrews at two places. This system which may provide a mechanism for the mounting and adjustment of the forming optic mandrel in a fixed position relative to another, which may be desirable in some embodiments of the present invention.

Referring now to Fig. 4B, the forming optic mandrel can be fixed to the plate to form the forming optic. One way to fix the forming optic mandrel to the holding plate may be using UV cured epoxies that have the ability to compensate for high thermal expansion differences. The UV cured epoxies may be used as a sealant and encapsulant for the forming optic mandrel. Examples of UV cured epoxies that may be acceptable stability, strength and chemical resistance are ones like Master Bond, Inc.'s UV15-7SP4, UV15X-2, UV15X-2GT, or Supreme 3HT. Additionally, where the thermal coefficient of the material of the mandrel is lower than the one of the plate used, the use of any adhesive may be sufficient for the positioning and adjustment accordingly.

At 401B, a rubber washer that may be temporarily used for positioning of the forming optic mandrel during the injecting of the UV cured epoxy into the alignment place is depicted. At 402B, an access fill part for the UV cured epoxy to be inserted is shown. This may allow the injecting and distribution around the forming optic mandrel. At 403B, a concave interlocking feature of the forming optic mandrel is depicted; the forming optic mandrel may be adjusted by external means while epoxy is not completely cured, after in position then UV light may be applied to lock position. Alternatively, a one or two part epoxy may be used such that there is enough working time to make adjustments.

Referring now to Fig. 5, the top view of an exemplary embodiment implementing a kinematic mounting device assembly for the forming optic is depicted. The exemplary kinematic mount can be held in place by two adjuster ball pins, 501 and 502, and a plunger 503. The plunger 503 rides in a grove that has a spring behind it, which can be captivated by a spring pin assembly screw representing the spring pin assembly. The plunger 503 may move in and out freely and engages the forming optic. A notch may be incorporated to avoid rotation of the mandrel. The spring pin assembly via the plunger pushes the forming optic assembly towards the left (in Fig. 5), the edge of which then impinges on the adjuster ball pins 501 and 502. Adjustment of either of the adjuster ball pins 501 and 502, may sufficiently adjust the entire X, Y and Z position of the forming optic mandrel 504 within the mounting plate 505.

As explained previously herein and described in Fig. 2, generally, BK7 glass and quartz surfaces are more durable, provide higher transparency and higher dimensional stability, and may allow for coatings to enhance shape features for the forming and curing of said customized ophthalmic lenses. Where compositions like BK7 glass or quartz are used, shape features of the ophthalmic lens may be enhanced by Pre-treating the optical quality forming surface and applying a coating or a monolayer that is capable of providing lower surface energy characteristics. For example, applying a coating or a monolayer that increases the contact angle provided by the forming surface may provide for the desired ophthalmic lens' edge shape.

The use of a coating to increase/decrease surface energy of the surface, or to create a better optical quality surface may be used. Coatings may be permanent or temporary and may be applied in many ways. For example, a coating may be the application of a synthetic hydrophobic surface-applied product that causes water to bead using a wipe or spray, thereby increasing contact angle. Thicknesses of said coatings may vary significantly. However, it can be important that the coating does not react in unexpected ways with the Reactive Mixture and that it acts in a constant manner in the method used.

A coating may include a particular monolayer that provides specific properties that may be advantageous for the optical quality forming surface of forming optic. One monolayer may include a 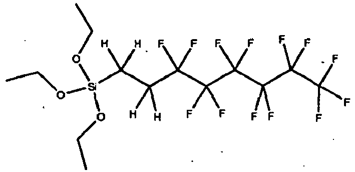 (tridecafluoro-1,1,2,2-tetrahydrooctyl)-triethoxysilane ("Fluoro Silane") monolayer. Further, a Fluoro Silane monolayer may be applied to a clean optic forming surface using the process for cleaning and applying the monolayer to the optic surface. Said monolayer can be durable and may provide a more hydrophobic surface, increasing contact angle, resulting in acceptable edge properties for ophthalmic use of said Free Formed lenses. Alternatively, or in addition, an Octadecyltrimethoxysilane ("Octadecyl Silane") 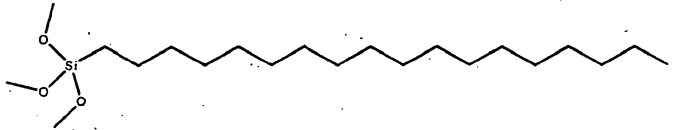 monolayer may be used. An Octadecyl Silane monolayer may be applied using the same suitable cleaning and monolayer bonding process.

The Octadecyl Silane monolayer may also result in lower surface energy characteristics and either of which may bond with the selected glass, quartz. Where specific thermoplastic polymers are used with inherent low surface energy characteristics, the monolayer may not be required.

In BK7 glass or quartz, because of the chemistry in these, it is possible to polymerize the Fluorosilane with the surface by forming a covalent bond with the SiO₂, which is a fundamental property of the glass. Once this occurs, it may provide a monolayer providing much lower surface energy. Said monolayer may be very strong by nature as opposed to some coatings used to smooth out surfaces, which may break off in pieces. Additionally, these Monolayers would be almost undetectable and would not be used to smooth out the surface of for the release of the formed lens.

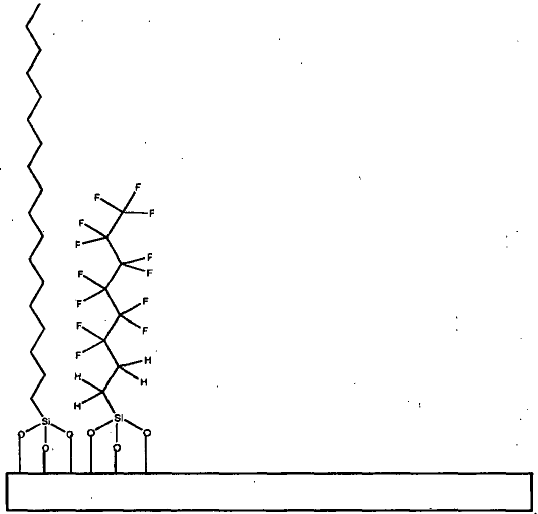

Bonding to the forming optic surface may increase the contact angle, θ. Contact angle is a quantitative measure of the wetting of a solid by a liquid. It is defined geometrically as the angle formed by a liquid at the three-phase boundary where a liquid, gas, and solid intersect. Low values of contact angle (θ) indicate that the gel used will spread, or wets well, while a high contact angle indicate poor wetting. Contact angle is commonly used as the most direct measure of wetting. Other experimental parameters may be derived directly from contact angle and surface tension results. For example, the work of spreading is the negative free energy associated with the spreading of a liquid over a solid surface. Measurements of surface tension yield data may directly reflect thermodynamic characteristics of the reactive monomer tested and therefore, if you wish to characterize the wetting behavior of a particular liquid/solid pair, you only need to report the contact angle.

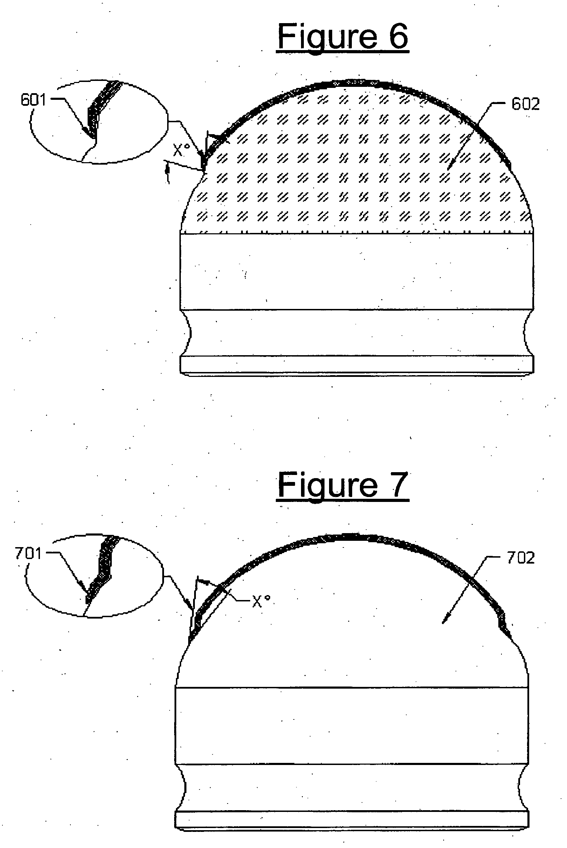

Referring now to Fig. 6 and Fig. 7 a side view of an exemplary forming optic is depicted. Fig. 6 illustrates an exemplary forming optic mandrel surface with an ophthalmic lens with edge characteristics resulting from the pre-treatment of the forming surface. At 602, a monolayer has been applied to the forming surface of the mandrel. At 601, the lens edge resulting from the higher contact angle of the monolayer is depicted, contrary to Fig. 7, which illustrates another exemplary forming optic mandrel surface with an ophthalmic lens with edge characteristics resulting from the lack of pre-treatment of the forming surface 702. At 701, the forming surface would cause the lens edge to droop over the surface and provide a lens with unacceptable edge characteristics for normal wear.

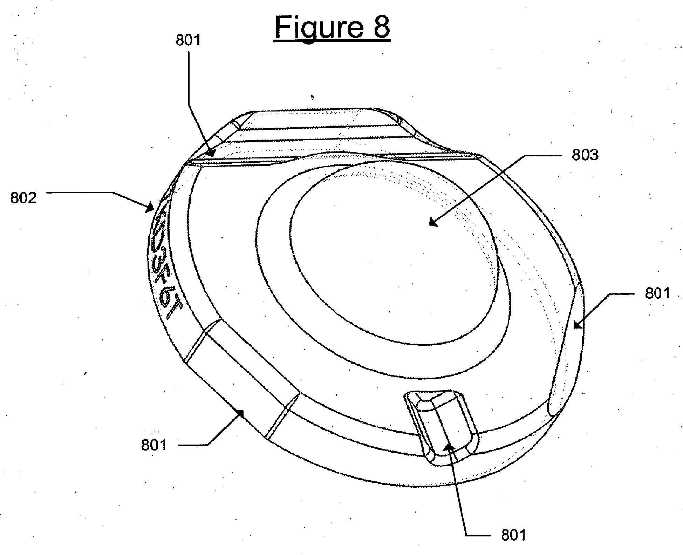

Referring now to Fig. 8, an isometric view of yet another exemplary forming optic comprising multiple mechanical alignment means, and identifier features that may be useful in the present invention is depicted. At 801, various mechanical alignment features are depicted. The present exemplary forming optic embodiment may be aligned by an additional kinematic mount that may only requires a one time center adjustment. This forming optic may be manufactured, for example, using glass molding technology known. The molder forming optic may be accurately manufactured to the submicron level. Further, the forming optic may allow for easier removal for cleaning, reapplying a coating without changing the convergence values in the Free Form process used. The mechanical features 801 may provide for only one degree of freedom which is not subject to temperature variation.

At 802, a forming optic identifier may be molded on a surface of the forming optic outside the optical forming surface 803 and so that it does not affect the optical path for radiation to go through.

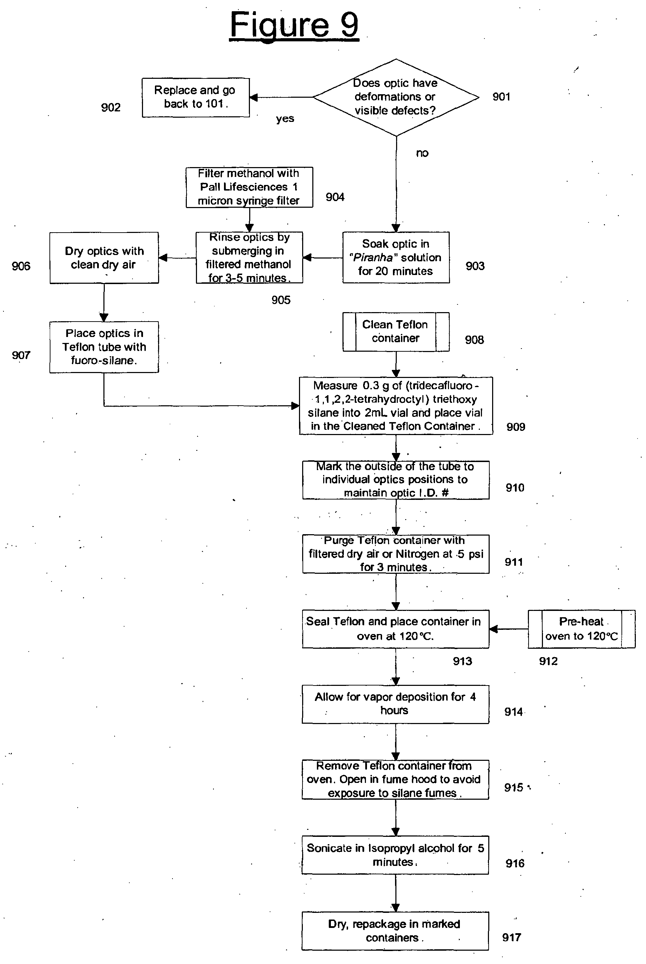

Referring now to Fig. 9 is a flowchart illustrating an exemplary method of cleaning and pre-treatment of the optic surface that may be used in the present invention is provided. At 901, the forming optic is observed for deformations or visible defects. At 902, if it is determined that the optic does have deformations or visible defects, the optic should be replaced until one that is conforming is found to proceed to step 903. At 903, the forming optic is exposed to a Piranha Solution. As used herein, a Piranha Solution includes a mixture of sulfuric acid (H₂SO₄) and hydrogen peroxide (H₂O₂). The Piranha Solution may be used to clean the forming optic, and in particular to clean organic residues. The cleaning step may also include the application of a hydroxylate to the surfaces of the forming optic. Accordingly, the Piranha Solution can add OH groups to the surface of the optic increasing the hydrophilic properties of the optic.

As referred to herein, a Piranha Solution may be a mixture that includes 3:1 concentrated sulfuric acid to 30% hydrogen peroxide solution; other protocols may use a 4:1 or even 7:1 mixture. Alternatively, the method may use a solution which is known as a "base piranha", which includes a 3:1 mixture of ammonium hydroxide (NH₄OH) with hydrogen peroxide.

Cleaning may include between about 1 to 40 minutes of exposure of the optic to the Piranha Solution. The Piranha solution may be mixed before application or directly applied to the optic, applying the sulfuric acid first, followed by the peroxide. Due to the self-decomposition of hydrogen peroxide, the Piranha Solution may preferably be prepared at the time of application or close to the time of application to the optic. Cleaning may include application of the Piranha Solution to the optic or immersing the optic into the Piranha solution.

At 904, methanol can be filtered. For example, the methanol may be filtered with a Pail Lifesciences 1 Micron syringe filter. At 905, the optics are rinsed by submersion in the filtered methanol for 3-5 minutes. At 906, the optics are dried with clean dry air. At 907, the optics are placed in a clean Teflon tube with fluoro-silane solution. At 908, a Teflon container may be cleaned prior to 909. At 909, 0.3 g of (tridecafluoro-1,1,2,2-tetrahydroctyl) triethoxysilane can be measured and placed in a vial in the cleaned Teflon container. At 910, a mark may be made outside of the tube to individual optic positions to maintain optic identification.

At 911, the Teflon container may be purged with filtered dry air or Nitrogen at 5 psi for 3 minutes. At 912, an over may be pre-heated to 120° C (one hundred and twenty degrees Celsius). At 913, the Teflon container can be sealed and placed in the over at a temperature of about 120° C (one hundred and twenty degrees Celsius). Once inside the oven, at 914, vapor deposition can occur for about 4 (four) hours. At 915, the Teflon container can be removed and opened (in fume hood to avoid exposure to silane fumes). At 916, it is sonicated in Isopropyl alcohol for 5 (five) minutes to then dry, repackage in a marked container at 917.

To ensure constant measurements and test durability resulting for said monolayers, the contact angle may be measured after the application of a monolayer and through simulated testing procedures. Contact angles were measured for 9 drops of water on each sample. Contact angle was taken to be the average of the 9 drops. No difference in contact angles with position on the sample was observed.

### Durability Test 1

1. Samples were immersed in a 500 ppm solution of Tween and DI water at 90 °C for 15 minutes.
2. Samples were squirted with Isopropryl alcohol and then wiped clean (vigorously rubbed) with lens paper. Procedure repeated 10 times.

### Durability Test 2

1. Samples were immersed in a 500 ppm solution of Tween and DI water at 90 °C for 5 minutes.
2. Samples were squirted with Isopropryl alcohol and then wiped clean (vigorously rubbed) with lens paper. Procedure repeated 5 times.
3. Procedures 1 and 2 repeated 10 times.

**Table 1.**

| | Fluoro Silane | Octadecyl Silane |
|---|---|---|
| Cleaned Glass Substrate | 38 (3) | 38 (3) |
| SAM Coated Substrate | 110 (3) | 91 (4) |
| After Durability Test 1 | 102 (4) | 93(4) |
| After Durability Test 2 | 102 (3) | 91 (4) |

Water contact angle results for monolayer on ¼ wave BK7 windows (standard deviations in parentheses). Cleaned substrate refers to cleaning with sulfuric acid/hydrogen peroxide mixture. Contact angle for Etafilcon A on ¼ wave BK7 windows, and BK7 optics lenses provided by Vistakon are shown in Table 1.

**Table 2.**

| | ¼Wave BK7 Window | Optics Lens BK7 |
|---|---|---|
| Cleaned Glass Substrate | 27 (3) | 39(3) |
| Fluoro Silane Coated Substrate | 69 (5) | 67 (3) |

Contact angles between Etafilcon A monomer, ¼ wave BK7 window, and Vistakon BK7 optics lens (standard deviations in parentheses). Cleaned substrate refers to cleaning with solvent.

## Claims

1. A method for preparing a forming optic for the manufacture of an ophthalmic lens, the method comprising the steps of:
applying a solution comprising sulfuric acid (H₂SO₄) and hydrogen peroxide (H₂O₂);
rinsing the forming optic with methanol;
drying the forming optic in particulate free atmosphere; and
placing the optic in a first container capable of providing a barrier to an ambient atmosphere with flourosilane.

2. The method of claim 1 wherein the first container is a Teflon container.

3. The method of claim 1 additionally comprising the step of including (tridecafluoro-1,1,2,2-tetrahydroctyl) triethoxy silane within the first container.

4. The method of claim 3 wherein the amount of (tridecafluoro-1,1,2,2-tetrahydroctyl) triethoxy silane included within the container is about 0.3 g and it is placed within a second container.

5. The method of claim 4 wherein the second container is of a size adequate to be placed within the first container.

6. The method of claim 4 wherein the second container is a 2mL vial.

7. The method of claim 4 additionally comprising the step of placing the second container inside the first container.

8. The method of claim 7 additionally comprising the step of purging the first container with a gas.

9. The method of claim 8 wherein the gas is an inert gas and preferably the inert gas comprises nitrogen.

10. The method of claim 7 additionally comprising the step sealing the first container from an ambient atmosphere.

11. The method of claim 10 additionally comprising the step of heating the first container to a temperature between about 110°C and 130°C.

12. The method of claim 11 additionally comprising the step of sonicating the forming optic in a solution comprising isopropyl alcohol.

13. The method of claim 12 wherein the step of sonicating the optic in a solution comprising isopropyl alcohol takes place for about 5 minutes or more.

14. The method of claim 13 additionally comprising the step of applying a coating to the forming optic.

15. The method of claim 14 wherein the coating is a monolayer and preferably the monolayer is a silane monolayer.

## Patentansprüche

1. Verfahren zum Vorbereiten einer Ausbildungsoptik zur Herstellung einer ophthalmischen Linse, wobei das Verfahren die folgenden Schritte umfasst:
Auftragen einer Lösung, die Schwefelsäure (H₂SO₄) und Wasserstoffperoxid (H₂O₂) umfasst;
Abspülen der Ausbildungsoptik mit Methanol;
Trocknen der Ausbildungsoptik in teilchenfreier Atmosphäre und
Platzieren der Optik in einen ersten Behälter, der eine Grenze zu einer Umgebungsatmosphäre mit Fluorsilan bereitstellen kann.

2. Verfahren nach Anspruch 1, wobei der erste Behälter ein Teflonbehälter ist.

3. Verfahren nach Anspruch 1, das zusätzlich den Schritt des Miteinbeziehens von (Tridecafluor-1,1,2,2-tetrahydrooctyl)triethoxysilan in dem ersten Behälter umfasst.

4. Verfahren nach Anspruch 3, wobei die Menge an in dem Behälter enthaltenem (Tridecafluor-1,1,2,2-tetrahydrooctyl)triethoxysilan ungefähr 0,3 g beträgt und es in einen zweiten Behälter platziert wird.

5. Verfahren nach Anspruch 4, wobei der zweite Behälter von angemessener Größe ist, in den ersten Behälter platziert zu werden.

6. Verfahren nach Anspruch 4, wobei der zweite Behälter ein 2-ml-Vial ist.

7. Verfahren nach Anspruch 4, das zusätzlich den Schritt des Platzierens des zweiten Behälters in den ersten Behälter umfasst.

8. Verfahren nach Anspruch 7, das zusätzlich den Schritt des Spülens des ersten Behälters mit einem Gas umfasst.

9. Verfahren nach Anspruch 8, wobei das Gas ein Inertgas ist und das Inertgas vorzugsweise Stickstoff umfasst.

10. Verfahren nach Anspruch 7, das zusätzlich den Schritt des Abdichtens des ersten Behälters gegenüber einer Umgebungsatmosphäre umfasst.

11. Verfahren nach Anspruch 10, das zusätzlich den Schritt des Erhitzens des ersten Behälters auf eine Temperatur zwischen ungefähr 110 °C und 130 °C umfasst.

12. Verfahren nach Anspruch 11, das zusätzlich den Schritt des Beschallens der Ausbildungsoptik in einer Lösung, die Isopropylalkohol umfasst, umfasst.

13. Verfahren nach Anspruch 12, wobei der Schritt des Beschallens der Optik in einer Lösung, die Isopropylalkohol umfasst, für ungefähr 5 Minuten oder mehr stattfindet.

14. Verfahren nach Anspruch 13, das zusätzlich den Schritt des Auftragens einer Beschichtung auf die Ausbildungsoptik umfasst.

15. Verfahren nach Anspruch 14, wobei die Beschichtung eine Monoschicht ist und die Monoschicht vorzugsweise eine Silanmonoschicht ist.

## Revendications

1. Procédé de préparation d'une optique de formation pour la fabrication d'une lentille ophtalmique, le procédé comprenant les étapes consistant à :
appliquer une solution comprenant de l'acide sulfurique (H₂SO₄) et du peroxyde d'hydrogène (H₂O₂) ;
rincer l'optique de formation avec du méthanol ;
sécher l'optique de formation dans une atmosphère dépourvue de particules ; et
placer l'optique dans un premier récipient susceptible de fournir une barrière à une atmosphère ambiante avec du fluorosilane.

2. Procédé selon la revendication 1 dans lequel le premier récipient est un récipient en téflon.

3. Procédé selon la revendication 1 comprenant en outre l'étape d'incorporation de (tridécafluoro-1,1,2,2-tétrahydroctyl)triéthoxysilane à l'intérieur du premier récipient.

4. Procédé selon la revendication 3 dans lequel la quantité de (tridécafluoro-1,1,2,2-tétrahydroctyl)-triéthoxysilane incorporé à l'intérieur du récipient est d'environ 0,3 g et elle est placée à l'intérieur d'un deuxième récipient.

5. Procédé selon la revendication 4 dans lequel le deuxième récipient est d'une taille adéquate pour être placé à l'intérieur du premier récipient.

6. Procédé selon la revendication 4 dans lequel le deuxième récipient est un flacon de 2 ml.

7. Procédé selon la revendication 4 comprenant en outre l'étape de positionnement du deuxième récipient à l'intérieur du premier récipient.

8. Procédé selon la revendication 7 comprenant en outre l'étape de purge du premier récipient avec un gaz.

9. Procédé selon la revendication 8 dans lequel le gaz est un gaz inerte et de préférence le gaz inerte comprend de l'azote.

10. Procédé selon la revendication 7 comprenant en outre l'étape de scellement du premier récipient par rapport à une atmosphère ambiante.

11. Procédé selon la revendication 10 comprenant en outre l'étape de chauffage du premier récipient jusqu'à une température entre environ 110 °C et 130 °C.

12. Procédé selon la revendication 11 comprenant en outre l'étape de traitement pas ultrasons de l'optique de formation dans une solution comprenant de l'alcool isopropylique.

13. Procédé selon la revendication 12 dans lequel l'étape de traitement pas ultrasons de l'optique dans une solution comprenant de l'alcool isopropylique a lieu pendant environ 5 minutes ou plus.

14. Procédé selon la revendication 13 comprenant en outre l'étape d'application d'un revêtement à l'optique de formation.

15. Procédé selon la revendication 14 dans lequel le revêtement est une monocouche et de préférence la monocouche est une monocouche de silane.
